**Europäisches Patentamt**

**European Patent Office**

**Office européen des brevets**

(11) Veröffentlichungsnummer: **0 141 932**
A2

# EUROPÄISCHE PATENTANMELDUNG

(21) Anmeldenummer: **84109711.6**

(22) Anmeldetag: **16.08.84**

(51) Int. Cl.⁴: **F 23 G  5/08**, F 23 G  5/027,
C 04 B  7/43, C 10 L  10/00,
F 23 N  5/00

(30) Priorität: **25.08.83  DE 3330667**
**21.04.84  DE 3415211**

(43) Veröffentlichungstag der Anmeldung: **22.05.85**
**Patentblatt 85/21**

(84) Benannte Vertragsstaaten: **AT BE CH DE FR GB IT LI LU
NL**

(71) Anmelder: **Klöckner-Humboldt-Deutz
Aktiengesellschaft,
Deutz-Mülhelmer-Strasse 111 Postfach 80 05 09,
D-5000 Köln 80 (DE)**

(72) Erfinder: **Steinbiss, Eberhard, Höxterstrasse 18,
D-5000 Köln 91 (DE)**
Erfinder: **Herchenbach, Horst, Sonnenweg 6,
D-5202 Hennef 1 (DE)**
Erfinder: **Wolter, Albrecht, Dr., Bismarckstrasse 40,
D-5000 Köln 1 (DE)**

(74) Vertreter: **Beisner, Klaus, Dipl.-Ing. et al, c/o KHD
Humboldt Wedag AG Patente und Lizenzen
Wiersbergstrasse Postfach 91 04 57, D-5000 Köln 91 (DE)**

(54) **Verfahren und Anlage zur schadstofffreien Beseitigung von Schad- und Abfallstoffen mit geringem Heizwert, insbesondere Müll, durch Verbrennung.**

(57) Bei einem Verfahren zur schadstofffreien Beseitigung von Schad- und Abfallstoffen mit geringem Heizwert, beispielsweise Müll, durch Verbrennung, wird vorgeschlagen, dass der Verbrennungsprozess in einem Brennaggregat mittels Zufuhr von heisser Verbrennungsluft als Energieträger von so hoher Temperatur durchgeführt wird, dass Verbrennungs- und/oder Rauchgastemperaturen von wenigstens 1250°C erreicht werden. Hierfür kann beispielsweise der Verbrennungsprozess mit dem Herstellungsprozess von Zementklinker gekoppelt und parallel zu diesem durchgeführt werden, wobei ca. 800°C heisse Brennluft zur Verbrennung der Schadstoffe aus heisser Kühlerabluft abgezweigt und in das Brennaggregat eingeleitet und Rauchgas aus dem Brennaggregat in das System der Zementklinker-Brennanlage eingeleitet wird. Die Erfindung schlägt weiter vor, dass dem Müll kalkhaltige Carbonatträger zugesetzt werden. Eine Einrichtung weist ein Brennaggregat (3) mit einer Zuführung (13) für heisse Brennluft auf, welche vorzugsweise mit einem Zementbrennaggregat gekoppelt ist.

0141932

Anlage zum Patentgesuch der   - 1 -   K H D
Klöckner-Humboldt-Deutz              H 83/44/84/20
Aktiengesellschaft

vom 30. Juli 1984

Verfahren und Anlage zur schadstofffreien Beseitigung
von Schad- und Abfallstoffen mit geringem Heizwert,
insbesondere Müll, durch Verbrennung

---

Die Erfindung betrifft ein Verfahren und eine
Einrichtung zur schadstofffreien Beseitigung von Schad-
und Abfallstoffen mit geringem Heizwert, insbesondere
Müll, durch Verbrennung.

Mit dem Begriff der Schad- und Abfallstoffe sollen im
Sinne der Erfindung insbesondere Haus-, Kommunal-,
Landwirtschafts- und Industrie-Müll umfaßt sein, ohne
daß andere Stoffe auszuschließen sind, sofern sie
Anteile brennbarer Substanzen enthalten.

Nahezu alle bekannten Beseitigungsverfahren von Müll
haben nach heutigen Erkenntnissen mehr oder minder
gravierende Nachteile, die in der Folge zu einer Abkehr
von bekannten Praktiken und zur Konzeption neuer
Müllbeseitigungsverfahren zwingen.

So gelangen beispielsweise bei der Müll-Kompostierung
laugungsfähige Schwermetallverbindungen in den
biologischen Kreislauf und reichern sich an. Fallweise

K ä D
H 83/44/84/20
0141932

finden sich auch schädliche organische Verbindungen und/oder Kolibakterien, Salmonellen und andere pathogene Bakterien im Kompost.

Ähnliche Gefahren der Verseuchung von Erdreich und Grundwasser bestehen auch bei Mülldeponien. Durch Laugungs- beziehungsweise Zersetzungsvorgänge sowie Anreicherungen gelangen aus derartigen Deponien Schadstoffe, Gifte und Erreger ins Erdreich und Grundwasser. Darüberhinaus stehen in dichtbesiedelten Gebieten Deponieplätze kaum zur Verfügung, sind ein Ärgernis für das besiedelte Umfeld, und als Bau- und Nutzland noch für Jahrzehnte nach Schließung einer Deponie nicht brauchbar.

Die Beseitigung von Schad- und Abfallstoffen wie insbesondere Müll stellt demnach ein schwieriges Problem dar. Dies gilt insbesondere, wenn solche Abfallstoffe durch Verbrennung beseitigt werden. Denn dabei werden umweltbelastende Schadstoffe freigesetzt, wie beispielsweise Stickoxide, Verbindungen von Schwefel, Halogene oder Alkalien, sowie gegebenenfalls Dämpfe von Schwermetallen. Darüberhinaus wird vielfach der Wärmeinhalt der brennbaren Anteile oder Abgase nicht genutzt und geht verloren.

Kommunaler Hausmüll, der vielfach in Ballungsgebieten in aufwendigen Müllverbrennungsanlagen entsorgt wird, enthält beispielsweise Brennstoffanteile mit einem durchschnittlichen Heizwert von 2000 bis 2200 kcal/kg.

Müll-Verbrennungsanlagen, von denen man sich vor Jahrzehnten eine Lösung des Müll-Entsorgungsproblems versprach, sind gerade in jüngster Zeit wegen ihrer Schadstoffemissionen im Rauchgas und nicht

K n D
H 83/44/84/20
0141932

laugungsresistenten, insbesondere Schwermetall-Rückständen in der Flugasche beziehungsweise dem Waschwasser in die Schußlinie öffentlicher Kritik geraten. Einige dieser Anlagen mußten deshalb stillgelegt werden. Bei in Müll-Verbrennungsanlagen üblichen Rostfeuerungen mit Brennlufttemperaturen im Bereich um 400 bis 500 $^{o}$C erreicht die Feuerung nicht die zum sicheren Abbau organisch-toxischer Verbindungen wie Dioxine oder polychlorierte Biphenyle notwendigen Temperaturen. Auch die in die Flugasche beziehungsweise in das Waschwasser gelangenden Schwermetalle sind nicht in laugungsresistenter Form gebunden und reichern sich bei ihrer Deponierung zu gefährlichen Konzentrationen an. Hinzu kommt selbst bei besserer Führung der Feuerung, zum Beispiel durch Zugabe von Zusatzbrennstoff, als Nachteil zusätzlich zur Kostenerhöhung die Schwierigkeit, bei schwankendem Stoffgehalt des Mülls die Verbrennungstemperatur auf dem Rost laufend annähernd konstant zu halten.

Auch die vielfach als Ausweg angesehene Pyrolyse von Müll wirft erhebliche Probleme auf. Darüberhinaus wird die Kapazitätsbegrenzung der Schwelkammern als Nachteil empfunden. Ein Schwelprozess unter Luftabschluß und Wärmezufuhr kann ersichtlicherweise nur in geschlossenen Kammern vorzugsweise diskontinuierlich erfolgen.
Dabei entstehen Umweltgefahren, wenn beispielsweise durch Unachtsamkeit bei der Prozessführung die Vergasungstemperaturen eine vorgesehene Grenze über- oder unterschreiten. In diesem Falle ist die Bildung von Dioxinen, beispielsweise aus chlorhaltigen Kunststoffabfällen, nicht auszuschließen.
Ähnlich wie die Rostfeuerung bei

K n D
H 83/44/84/20
0141932

Müll-Verbrennungsanlagen unterliegt folglich auch der Prozeß der Pyrolyse erheblichen Schwierigkeiten und Risiken.

Der Erfindung liegt die Aufgabe zugrunde, Schad- und Abfallstoffe durch Verbrennung in einer solchen Weise zu beseitigen, daß keine umweltbelastenden Schadstoffe entstehen oder emittiert werden, und daß der in den Abfallstoffen enthaltene Wärmeinhalt wirtschaftlich und technisch sinnvoll genutzt wird. Darüberhinaus soll eine hierfür geeignete Einrichtung wesentlich geringere Investitions- und Betriebskosten verursachen, als solche beispielsweise bei einer üblichen Müllverbrennungsanlage entstehen. Und schließlich soll sich die Einrichtung zur wirtschaftlich vorteilhaften und technisch problemlosen Koppelung mit einer vorhandenen pyrotechnischen Anlage, beispielsweise einer Zementbrennanlage, eignen.

Die Lösung der gestellten Aufgabe gelingt mit dem Verfahren nach der Erfindung dadurch, daß der Verbrennungsprozeß in einem Brennaggregat unter Zufuhr von heißer Verbrennungsluft als Energieträger von so hoher Temperatur durchgeführt wird, daß Verbrennungs- und/oder Rauchgastemperaturen von wenigstens 1250 $^\circ$C erreicht werden.

Mit Vorteil ermöglicht die Verbrennung von Müll unter Zufuhr heißer Verbrennungsluft die Erreichung eines Temperaturbereichs von 1250 $^\circ$C auch dann, wenn der Heizwert der zu verbrennenden Schad- und Abfallstoffe gering ist und diese darüberhinaus, wie beispielsweise bei Müll, mit einem gewissen Feuchtigkeitsgehalt zur Verbrennung gelangen.

K H D
H 83/44/84/20
0141932

Die Einhaltung des angegebenen Temperaturbereiches ist deshalb von Vorteil, weil hierbei einerseits eine vollständige Zersetzung nahezu aller Schadstoffe, wie beispielsweise zyklische Kohlenwasserstoffe oder toxische Verbindungen von Schwefel, Halogenen beziehungsweise Holgeniden, Alkalien etc. stattfindet, und andererseits die Einhaltung dieser Grenze im Bereich bis 1250 $^{\circ}$C die thermische Bildung schädlicher Mengen von toxischen Stickoxiden praktisch verhindert.

Eine Ausgestaltung des Verfahrens sieht zur Einhaltung dieser Temperaturgrenze vor, daß die Temperatur der Verbrennungsluft nach Maßgabe des Heizwertes der zu verbrennenden Stoffe beziehungsweise nach Maßgabe der Verbrennungs- und Rauchgastemperaturen eingestellt wird.

Dies kann im Falle eines übermäßigen Temperaturanstieges infolge höheren Heizwertes der zur Verbrennung gelangenden Stoffe beispielsweise durch Beimischung von Frischluft erreicht werden.
Um Abfallstoffe mit geringem Heizwert wie zum Beispiel Hausmüll wirtschaftlich und problemlos verbrennen zu können, sieht eine Ausgestaltung der Erfindung vor, daß die Verbrennungsluft mit einer Temperatur im Bereich zwischen 600 $^{\circ}$C und 950 $^{\circ}$C, vorzugsweise mit ca. 800 $^{\circ}$C dem Brennaggregat zugeführt wird.

Hierbei hat sich überraschend gezeigt, daß die erstrebte Hochtemperatur-Verbrennung vorzugsweise ohne Zugabe anderer Brennstoffe erreicht wird und die heiße Brennluft als Energieträger ausreicht, um einen sauberen, für die Umwelt belastungsfreien Brennprozeß zu initiieren und zu unterhalten.

Um den in den zu entsorgenden Schad- und Abfallstoffen enthaltenen, wenn auch geringen Heizwert, möglichst weitgehend zu nutzen sowie toxische Verbindungen restlos zu dekompensieren, schlägt eine Ausgestaltung vor, daß der Verbrennungsprozeß mit einem im Verhältnis zum Brennstoffanteil stöchiometrisch zumindest ausgeglichenen Anteil an heißer Brennluft durchgeführt wird.

Eine erfindungswesentliche, weil technisch und wirtschaftlich besonders vorteilhafte Ausgestaltung des Verfahrens ergibt sich dadurch, daß der Verbrennungsprozeß zugleich und in Kombination mit einem Herstellungs- und Brennprozeß einer Zementklinker-Brennanlage durchgeführt wird, wobei Brennluft für den Verbrennungsprozeß der Schadstoffe aus dem beim Abkühlen des Klinkers entstehenden heißen Kühlerabluftstrom abgezweigt und Rauchgas aus dem Schadstoff-Verbrennungsprozeß in das System der Zementklinker-Brennanlage eingeleitet wird.

Mit dieser Ausgestaltung ergeben sich eine Reihe von Vorteilen:
Mit der Kühlerabluft steht einerseits wirtschaftlich erzeugte heiße Brennluft zur Verfügung, die - je nach Kühlerbauart - im Temperaturbereich zwischen 650 $^{o}$C und 950 $^{o}$C anfällt.
Diese Temperatur reicht in praktisch vorkommenden Fällen der Müllverbrennung aus, um eine vorgesehene Verbrennungs-Temperatur im Brennaggregat von 1250 $^{o}$C zu erreichen beziehungsweise zu halten.
Die Kühlerabluft ist zudem mit Klinkerstaub beladen, der infolge seiner Temperatur, seiner hohen aktiven Oberfläche und seiner mineralogischen Zusammensetzung einen optimalen Aktivierungsgrad zur Bindung von Schadstoffen besitzt.

K H D
H 83/44/84/20
0141932

Die Rückführung der Abgase aus dem Brennprozeß in das System der Zementbrennanlage ermöglicht zudem eine wirtschaftlich und technisch sinnvolle Nutzung ihres Wärmeinhaltes, beispielsweise bei der Calcination des Rohmehls, bei dessen Vorwärmung, oder in einer der Zementbrennanlage vorgeschalteten Mahltrocknungsanlage.

Neben der Nutzung des Wärmeinhaltes der Rauchgase, die etwa bei 70 % ihres Wärmeinhaltes liegt, hat die Einführung der Gase in Calcinator, Zyklon-Wärmetauscher und Mahltrocknung den Vorteil, daß Schadstoffe, die im Abgas enthalten sind, adsorptiv oder chemisch an das Gut gebunden werden. Dadurch wird mit Vorteil die Emission dieser Schadstoffe weitgehend oder annähernd vollständig unterbunden.

Es ist zwar schon ein Verfahren zur Verwertung industrieller Abfälle in Brennprozessen zur Herstellung von Erdalkalioxiden, -silikaten oder -aluminaten bekannt, bei dem die Abfälle so mit dem Brenngut in Berührung gebracht werden, daß es die bei der Verbrennung oder Zersetzung der Abfälle entstehenden anorganischen Bestandteile der Abfälle aufnimmt. Das bekannte Verfahren sieht dabei vor, daß für den Brennprozeß ein Drehrohrofensystem verwendet wird, wobei die Abfälle mit einem Trägerluftstrom am Ofenkopf in das Drehrohr eingeblasen werden. Auch können die Abfälle beispielsweise in den Einlauf des Klinkerkühlers eingebracht werden (DE-OS 26 24 971).

Das bekannte Verfahren hat den Nachteil, daß das Brenngut infolge der Mischung mit den Abfällen in seiner Qualität erheblich gemindert werden kann.

0141932

Wesentliche Vorteile ergeben sich beim erfindungsgemäßen Verfahren zur schadstofffreien Beseitigung von Müll durch Verbrennung weiter dadurch, daß dem Müll kalkhaltige Carbonatträger in solcher Menge zugesetzt werden, daß der CaO-Gehalt im Brennprodukt wenigstens 30 Masse-Prozent beträgt, wobei der Müll mit Calciumcarbonat enthaltenden Stoffen bei Temperaturen von mindestens 1200 °C zum Brennprodukt umgesetzt wird.

Mit Vorteil wird durch Verbrennung von Müll mit kalkhaltigen Carbonatträgern bei wenigstens 1250 °C ein vollständiger Abbau aller organischen, insbesondere toxischen Stoffe in oxidische, wasserunlösliche Substanzen erreicht. Nichtorganische Stoffe wie Schwermetalle werden andererseits laugungsresistent in der Schlacke gebunden. Damit kann das Brennprodukt erforderlichenfalls gefahrlos und umweltfreundlich einer Deponie zugeführt werden, ohne daß die Gefahr einer Contamination von Erdreich und/oder Grundwasser gegeben ist.

Eine Ausgestaltung sieht vor, daß der CaO-Gehalt des Brennproduktes zwischen 30 % und 70 %, vorzugsweise zwischen 40 % und 55 % beträgt, wobei die Zusatzmenge vorteilhaft nach Maßgabe von Art und Menge der aus dem entstehenden Gas abzuscheidenden Schadstoffe eingestellt, wird.

Hierbei kann auch carbonathaltiges Gut in Form einer Flugstaubwolke in das Abgas nach Maßgabe der aus dem Gas abzuscheidenden Schadstoffe eingeführt und das Abgas durch die als reaktives Rückhaltefilter wirkende Flugstaubwolke von Schadstoffen wie $SO_2$ gereinigt werden.

Infolge Durchführung der Verbrennung in einem mit einer Zementklinker-Brennanlage erfindungsgemäß gekoppelten vorzugsweise parallel zu dieser betriebenen Brennaggregat, wobei Brennluft für die Verbrennung der Schadstoffe aus dem heißen Kühlerabluftstrom abgezweigt und in das Brennaggregat eingeleitet, und Rauchgas aus dem Brennaggregat in das System der Zementklinker-Brennanlage eingeleitet wird, entfallen die bei einer bekannten Drehrohrofen-Beschickung nachteiligen Beeinflussungen des Zement-Brennprozesses, die zur Minderung der Klinkerqualität und/oder Verschlechterung der wärmewirtschaftlichen Situation führen.

Mit Vorteil erfolgt der Eintrag der im Brennaggregat entstehenden Rauchgase an Stellen, wo durch längere Verweilzeiten und Vorhandensein reaktionsfähigen Zementrohmehles, wie beispielsweise in der Calcinationszone, ausreichend lange Reaktionszeiten die adsorptive oder chemische Bindung von Schadstoffen an das Zementrohmehl begünstigen.

Wenn dennoch, je nach mineralogischer Zusammensetzung des Rohmehles, die Tendenz zu einer Kreislaufbildung von Schadstoffen vorhanden sein sollte, kann mit der Erfindung von der an sich bekannten Maßnahme eines Teilgasabzuges (Bypass) Gebrauch gemacht werden.

Weiter sieht eine Ausgestaltung des Verfahrens vor, daß mineralisierte Rückstände des Schadstoff-Verbrennungsprozesses wenigstens zum Teil dem Brenngut der Zementbrennanlage hinzugefügt und gegebenenfalls zusammen mit dem Klinker gebrannt, gekühlt und/oder vermahlen werden.

K H D
H 83/44/84/20
0141932

Auch können im Falle von nutzungshinderlichem Schadstoffgehalt der im abgezogenen Gas anfallenden Kondensate und/oder Stäube diese beispielsweise zusammen mit dem Brennprodukt zu einer auslaugungsresistenten, gefahrlos deponierbaren Konsistenz, beispielsweise durch Hydratisierung verarbeitet werden.

Desgleichen kann im Falle von Schadstoffgehalt das Brennprodukt allein vor einer weiteren Nutzung oder Verwerfung zu einer Konsistenz verarbeitet werden, bei welcher Schadstoffe in einer Bindung vorliegen, die eine Gefährdung der Umwelt ausschließen. Vorzugsweise kann diese Konsistenz des Brennproduktes durch Hydratisierung mit oder ohne Zugabe von Zuschlagstoffen und/oder weiteren Bindemitteln hergestellt werden.

Damit ist sichergestellt, daß weder aus Rückständen des Verbrennungsprozesses oder aus dessen Abgas noch aus schadstoffhaltigem Brennprodukt toxisch wirkende Stoffe in die Umwelt gelangen können.

Es hat sich dabei mit Vorteil herausgestellt, daß solche Verbrennungsrückstände, die zumeist Asche, Schlacken und/oder geringe Anteile von Metallen enthalten, in vielen Fällen problemlos dem Zementklinker zugeschlagen werden können, ohne dessen Qualität zu mindern.

Durch die Ausbildung der Müll-Entsorgungseinrichtung mit einem separaten, in sich geschlossenen Brennaggregat ergeben sich nicht nur die vorgängig genannten Vorteile bei Koppelung mit einer Anlage zum Brennen von Mineralien wie Zement, sondern mit Vorteil auch die Möglichkeit, den Verbrennungsprozeß der Abfallstoffe und unabhängig davon den Brennprozeß der Mineralien zu optimieren.

Weil durch den Anschluß des Brennaggregates an eine Heißgasquelle die Zündtemperatur und insbesondere die Zündwilligkeit der Abfallstoffe auch bei geringem Heizwert sicher erreicht wird, entfällt die bei der Müllverbrennung bisher vielfach erforderliche Zuführung hochwertiger Brennstoffe als zusätzliche Energieträger.

Das Brennaggregat kann mit Vorteil im Vergleich zu herkömmlichen Müll-Verbrennungsanlagen relativ unkompliziert ausgestaltet sein, insbesondere im Falle seiner Ausbildung mit einem Wirbelschicht-Brennaggregat. Hierdurch ergeben sich wesentliche Einsparungen an Investitions- und Betriebskosten.

Insgesamt werden durch Koppelung oder Parallelbetrieb der Müllverbrennung mit einer Zementbrennanlage diese Vorteile bei relativ geringem Aufwand erreicht.

Unter anderem wird hierdurch ein selbständiges Rekuperationssystem für Brennluft sowie ein Entsorgungs- und/oder Reinigungssystem für Abgas eingespart.

Darüberhinaus steht für eine Zugabe kalkhaltiger Carbonatträger Zementrohmehl äußerst preisgünstig und ohne größere Transportprobleme ständig zur Verfügung.

Um das erzeugte Brennprodukt mit Vorteil einer Verwendung als hydraulisches Bindemittel zuzuführen, kann gemäß einem Ausgestaltungsvorschlag vorgesehen

K H D
H 83/44/84/20
0141932

sein, daß das Brennprodukt zu einem glasigen Zustand aufgeschmolzen wird. Dieses kann dann in bekannter Weise wie Schlacke granuliert und als hydraulisch aktivierbare Komponente der Produktmahlstufe eines Zementwerkes zugesetzt werden.

Weitere Ausgestaltungen des Verfahrens beziehungsweise der Einrichtung nach der Erfindung ergeben sich entsprechend den Merkmalen der Unteransprüche.

Im folgenden wird die Erfindung mit ihren Vorteilen anhand von Ausführungsbeispielen in der Zeichnung näher erläutert.
Es zeigen:

Fig. 1     ein Verfahren nach der Erfindung, im Blockschaltbild, mit einer Vorwärm- und Calcinierstation, einer Brennstation und einer Kühlstation;

Fig. 2     ein Blockschaltbild einer dem Schema gemäß Fig. 1 gleichen Anlage, jedoch mit einer der Vorwärmstation vorgeschalteten Trockenmahlstation für die kalkhaltigen Carbonatträger,

Fig. 3     einen Verfahrensgang ähnlich Fig. 2, jedoch mit einer zusätzlichen Pyrolysestation für den Müll,

Fig. 4     eine Müllverbrennungseinrichtung in Koppelung mit einer Zementbrennanlage.

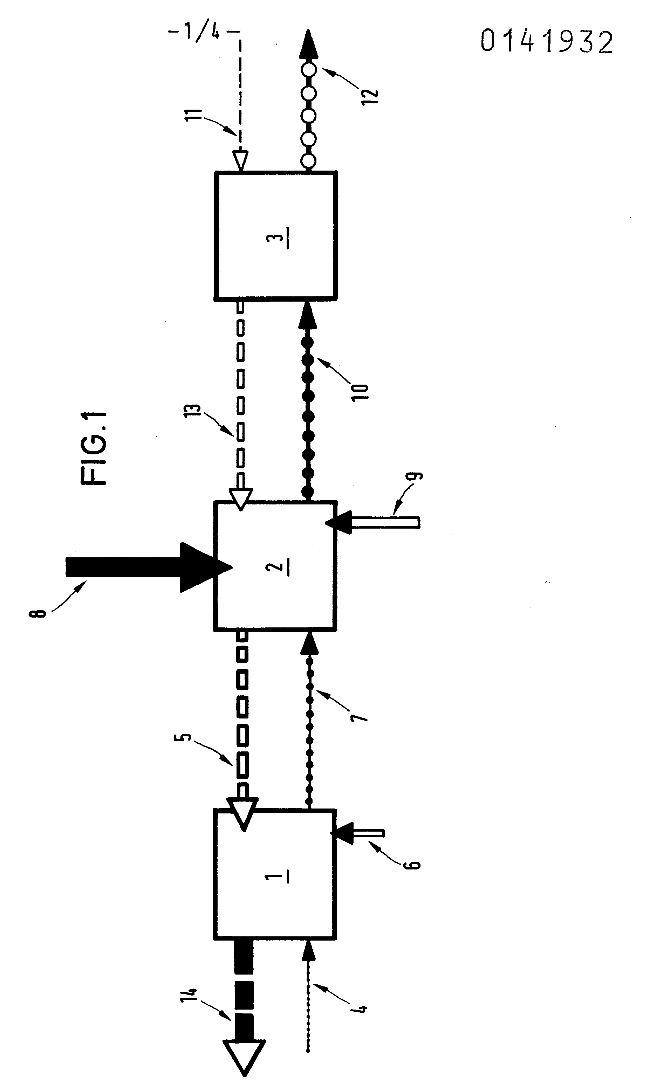

Das Schema der Anlage gemäß Fig. 1 umfaßt eine Vorwärm- und Calcinierstation 1, eine Brennstation 2 und eine

0141932

Kühlstation 3. Der Vorwärm- und Calcinierstation 1 wird ein kalkhaltiger Carbonatträger 4 in Mehlform aufgegeben. Dieses Gut wird im direkten Wärmeaustausch im Gegenstrom zu heißem Ofengas 5 der Brennstation 2 aufgeheizt und zumindest teilweise calciniert. Zur Deckung des Wärmebedarfs beim endothermen Prozeß der Calcination wird bedarfsweise Brennstoff 6 zugeführt. Das erhitzte und teilentsäuerte Rohmehl 7 gelangt im weiteren Verlauf des Prozesses in die Brennstation 2.

Dieser wird auch Müll 8 aufgegeben. Müll 8 und entsäuertes Rohmehl 7 werden in der Brennstation 2 miteinander innig vermischt und bedarfsweise unter Zugabe von Brennstoff 9 bei Temperaturen oberhalb 1250 $^{o}$C gebrannt. Dabei wird der Müll 8 mit kalkhaltigen und insbesondere Carbonate enthaltenden Stoffen 4 bei Temperaturen zum Beispiel um 1350 $^{o}$C und höher zum Brennprodukt 10 umgesetzt. Dieses gelangt aus der Brennstation 2 in die Kühlstation 3. Darin wird es mit Kühlluft 11 gekühlt und als Endprodukt 12 ausgetragen. Hierbei erwärmt sich die Kühlluft 11 und wird als heiße Brennluft 13 mit Temperaturen zwischen 800 und 1000 $^{o}$C in die Brennstation eingetragen und erzeugt dort erforderlichenfalls mit Zusatzbrennstoff 9 eine Hochtemperatur-Müllverbrennung. Dabei entsteht heißes Ofenabgas 5, welches, wie vorgängig erwähnt, den Wärmebedarf zur Erwärmung und Entsäuerung der Carbonatträger 4 liefert. Nach Abgabe eines großen Teils der fühlbaren Wärme und Bindung mitgeführter Schadstoffe wie Schwefeldioxid im reaktiven Filter der Flugstaubwolke wird Abgas 14 aus dem Prozeß ausgeschieden.

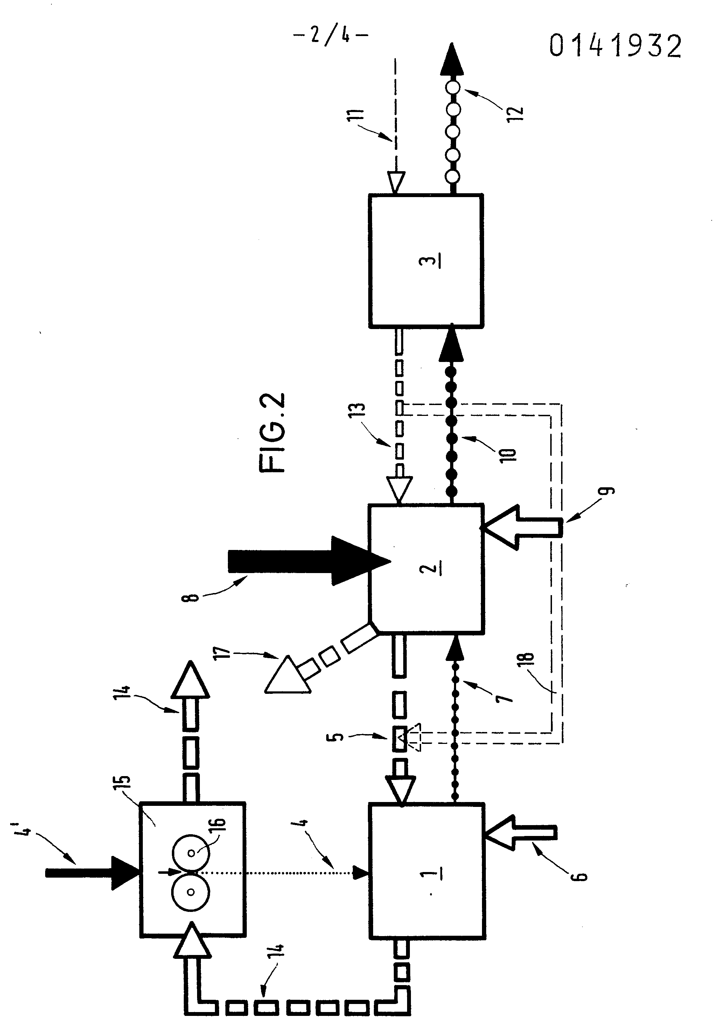

Fig. 2 zeigt einen ähnlichen Verfahrensstammbaum, ebenfalls mit den grundsätzlichen drei Stationen, nämlich der Vorwärm- und Calcinierstation 1, der

0141932

Brennstation 2 und der Kühlstation 3. Beim gezeigten Prozeßgang ist der Vorwärm- und Calcinierstation 1 eine Mahltrocknungsstation 15 für den Carbonatträger-Grundstoff 4' vorgeschaltet. Dieser wird grubenfeucht der Mahltrocknungstation 15 aufgegeben und darin im Abgasstrom 14 getrocknet und in einer rein schematisch angedeuteten Zerkleinerungseinrichtung 16 zu Mehl gemahlen. Dabei wirkt die Mahltrocknungseinrichtung für das Abgas 14 zusätzlich als reaktiver beziehungsweise adsorptiver Filter, durch den Abgas 14 zusätzlich gereinigt wird. Sollten dennoch Schadstoffreste im Abgas 14 vorhanden sein, kann dieses einer bekannten Gasreinigung zugeführt werden.

Eine erhebliche Schadstoffentlastung im Gashaushalt des Verfahrens wird jedoch erforderlichenfalls durch den Gasabzug 17 erreicht, der aus der Brennstation 2 abzweigt. Mit diesem werden bei Prozeßtemperaturen zu Verdampfungs- beziehungsweise Kondensationskreisläufen neigende Elemente wie Halogene oder Schwefel bei schädlicher Konzentration durch den Gasabzug 17 mindestens zum Teil aus dem Brennprozeß abgezogen. Weil jedoch die Vorwärm- und Calcinierstation je nach der Menge des abgezogenen Gases weiterhin betriebsfähig bleiben muß, kann in diesem Falle durch eine Umgehungsleitung 18 das abgezogene Gas durch heiße Brennluft 13 aus der Kühlstation 3 entsprechend ergänzt werden.

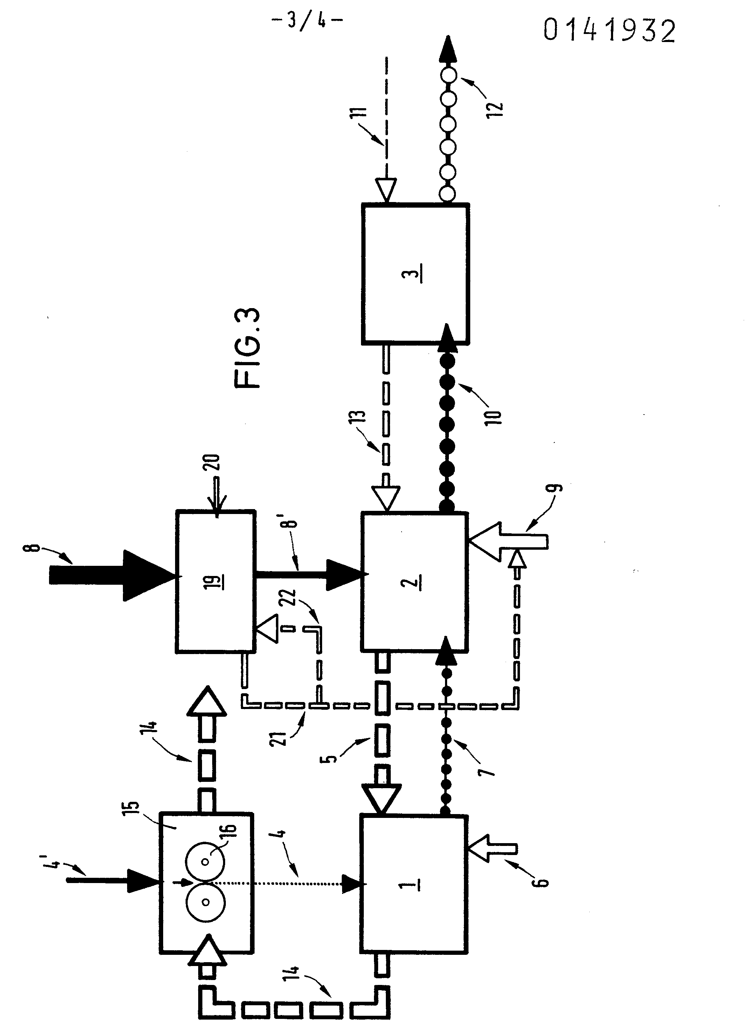

Fig. 3 zeigt eine andere Ausgestaltung des Verfahrens nach der Erfindung mit Aufgabe von Müll 8 in eine Pyrolysestation 19. Darin wird der Müll 8 in einer Kammer unter Sauerstoffmangel einer Trockendestillation mit Zufuhr von Wärme unterzogen. Zur Ingangsetzung dient eine Fremdbeheizung 20 solange, bis Schwelgas 21

H 83/44/84/20
0141932

entsteht. Dieses wird der Brennstoffaufgabe 9 der Brennstation 2 zugeleitet. Ein abgezweigter Teilstrom 22 vom Schwelgas deckt den Wärmebedarf der Pyrolysestation 19. Müll 8 wird in die Kammer unter Luftabschluß eingeführt und Pyrolyse-Rückstand 8' nach der Vergasung des Mülls der Brennstation 2 aufgegeben und darin mit entsäuertem Rohmenl 7 vermengt und zum Brennprodukt, wie bereits vorgängig beschrieben, gebrannt beziehungsweise gesintert.

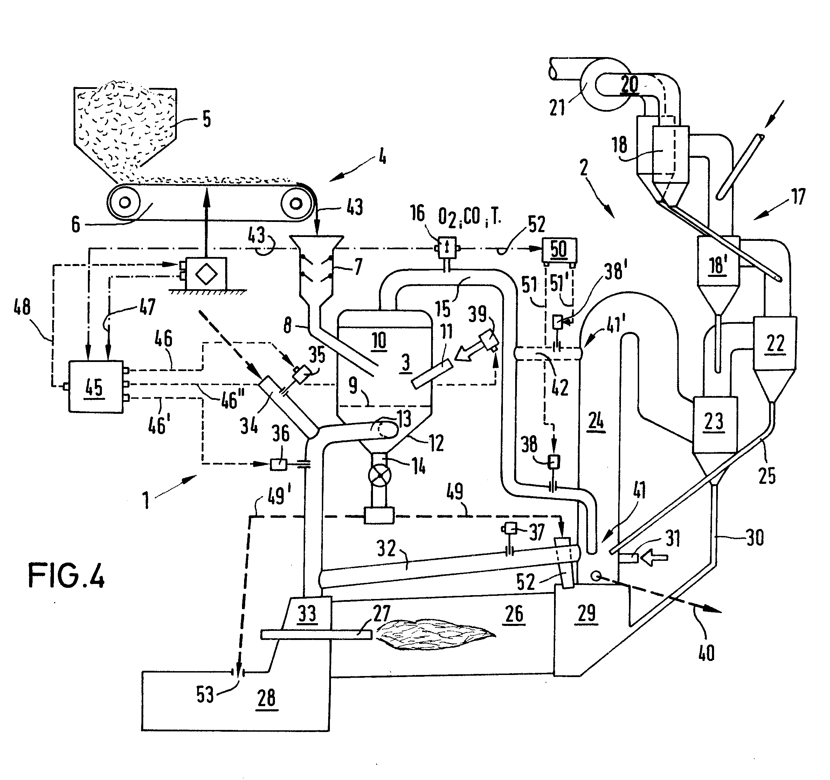

Figur 4 zeigt eine Einrichtung 1 zur Beseitigung von Schad- und Abfallstoffen nach der Erfindung in Koppelung mit einer Zementbrennanlage 2. Die Einrichtung zur Entsorgung 1 besitzt ein in sich geschlossenes Brennaggregat 3, das als Wirbelschicht-Ofen ausgebildet ist.
Das Brennaggregat kann aber auch ein anderer Ofentyp, beispielsweise ein Drehrohrofen sein.
Eine Gutaufgabeeinrichtung 4 hierfür weist den Vorratsbehälter 5 auf, der mit einem gravimetrisch dosierenden Abzugsorgan 6 ausgestattet ist. Es handelt sich im gezeigten Beispiel um eine dynamische Wägeeinrichtung in Form einer kontinuierlich arbeitenden Dosierbandwaage 6. Diese trägt die zu verbrennenden Schad- und Abfallstoffe gemäß Pfeil 43 über eine Gutschleuse 7 und eine Einlaufschurre 8 in den Brennraum 10 des Brennaggregates 3 ein. Dort bleiben die Stoffe zunächst auf dem Rost 9 liegen. Unterhalb dieses Rostes ist das Brennaggregat mit einem konischen Bodenteil 12 ausgebildet, in welches die Brennluftzuführung 13 einmündet. In den Brennraum 10 ragt ein Zünd- und Stützbrenner 11 hinein, dessen Brennstoffzufuhr durch das Regelorgan 39 eingestellt wird. Aus dem Gasraum beziehungsweise Brennraum 10 des Brennaggregates 3 führt ein Rauchgasrohr 15 heraus, in

K H D
H 83/44/84/20
0141932

dem eine Meßeinrichtung 16 angeordnet ist, mit der vorzugsweise die Gaszusammensetzung, insbesondere Anteile von freiem Sauerstoff und/oder CO, sowie gegebenenfalls die Temperatur des Rauchgases gemessen werden. Über eine Signalleitung 43 werden die ermittelten Meßwerte einer Regeleinheit 45 aufgeschaltet und dort in Steuerimpulse umgewandelt, die mittels Steuerleitungen 46, 46', 46'' die Einstellung der Drosselorgane 35 (Frischluft), 36 (heiße Verbrennungsluft) sowie 39 (Brennstoff für den Zusatzbrenner) beeinflussen.

Auf diese Weise wird mit einem relativ geringen Aufwand an regelungstechnischen Einrichtungen der Verbrennungsprozeß im Brennaggregat 3 nach Maßgabe der Rauchgastemperatur beziehungsweise einer vorgegebenen Rauchgaszusammensetzung gesteuert. In ähnlicher Weise wird, wie dies an sich bekannt ist, durch einen Soll/Istwert-Vergleich über die Signalleitung 47 und die Steuerleitung 48 die vorgegebene Aufgabemenge der zu verbrennenden Stoffe mit Hilfe der Dosierbandwaage 6 gesteuert.

Die Zementbrennanlage 2 besitzt einen Vorwärmerstrang 17 mit den Zyklonwärmetauschern 18, 18', 22 und 23. Die Abgasleitung 20 mündet in einen Exhaustor beziehungsweise ein Abgasgebläse 21, dessen Druckleitung zu einem nicht dargestellten Kamin führt. Die Zementbrennanlage 2 umfaßt ferner den Drehrohrofen 26 mit Brenner 27 sowie einen nachgeschalteten Kühler 28. In das Ofeneinlaufgehäuse 29 des Drehrohrofens 26 mündet eine Leitung 30 für calciniertes Mehl, die an den untersten Wärmetauscherzyklon 23 angeschlossen ist. Zwischen dem Ofeneinlaufgehäuse 29 und dem Vorwärmstrang 17 ist der Calcinator 24 angeordnet und

als Reaktionsschacht mit abgekröpftem oberen Ende ausgebildet. In das Fußende des Calcinators 24 mündet die Falleitung 25 für vorgewärmtes Rohmehl aus dem Zyklonwärmetauscher 22. In der gleichen Höhe mündet gegenüberliegend die Tertiärluftleitung 32 ein, sowie eine Brennstoffaufgabe 31. Die Tertiärluftleitung 32 ist ebenso wie die Leitung 13 der Brennluftzuführung zum Brennaggregat 3 mit je einem vorzugsweise einstellbaren Drosselorgan 36, 37 ausgestattet. Die Drosselorgane 36, 37 sind erforderlich, um ein definiertes Mengenverhältnis zwischen Tertiärluft und abgezweigter heißer Brennluft einstellen zu können. Anstelle solcher Drosselorgane, deren Ausführung beliebig ist, können auch Widerstände in Form von Rohrleitungsverengungen eingebaut sein.

Die Koppelung der Einrichtung zur Beseitigung beziehungsweise Entsorgung von Schad- und Abfallstoffen mit der Zementbrennanlage 2 ist erfindungsgemäß so vorgesehen, daß einerseits die Brennluftzuführung 13 zum Brennaggregat 3 an den Heißluftaustritt 33 des Kühlers 28 angeschlossen ist, und daß andererseits die Rauchgasleitung 15 vom Brennaggregat an der Stelle 41 in den Calcinator 24 einmündet. Dies hat als

Nebeneffekt noch den weiteren Vorteil, daß zwischen beiden Anschlußstellen 33 und 41 ein Druckgefälle herrscht, welches genügt, um die Versorung des Brennaggregates 3 mit heißer Brennluft und den Abzug der Rauchgase ohne zusätzliches Heißgasgebläse sicherzustellen. Zudem benötigt infolgedessen die Müllverbrennungs- Einrichtung keine separate beziehungsweise eigenständige Lufterhitzungseinrichtung, keine kostenträchtige Zuspeisung größerer Mengen an hochwertigen Brennstoffen und keine eigene Rauchgas-Abzugs und -reinigungsanlage.

Hierdurch ergeben sich erhebliche Kostenvorteile bei Investition und Betrieb.

In der Rauchgasleitung 15 ist zusätzlich mit Vorteil das Drosselorgan 38 eingebaut, welches eine Einstellung der Strömungsgeschwindigkeit nach Maßgabe der pro Zeiteinheit verbrannten Gutmenge steuert. Dieses Drosselorgan 38 ist an die Regeleinheit 50 über die Steuerleitung 51 angeschlossen. Die Regeleinheit 50 steht ihrerseits mit einer Steuerleitung 52 mit der Meßeinrichtung 16 in Verbindung. Dabei ist eine Regelschaltung bespielsweise so vorgesehen, daß bei unzulässigem Temperaturanstieg im Rauchgas eine Drosselung der Rauchgasleitung durch das Drosselorgan 38 erfolgt.

Im Falle eines erhöhten Schadstoffgehaltes im Rauchgas, der zu einer Beeinträchtigung der chemischen Reaktion beim Calciniervorgang führen könnte, ist die Anordnung einer Zweigleitung 42 vorgesehen (gestrichelt eingezeichnet), welche Rauchgas an einer höher gelegenen Stelle 41' des Calcinators in diesen einströmen läßt. An dieser Stelle ist die Calcinierungsreaktion erheblich fortgeschritten und wird infolgedessen durch mögliche Schadstoffbeimengungen nicht oder nur unwesentlich beeinflußt.

Die Einrichtung 1 zur Beseitigung von Schad- und Abfallstoffen sieht weiterhin vor, daß Verbrennungsrückstände aus dem Brennaggregat 3 entweder in den Drehrohrofen 26 oder in den Kühler 28 eingetragen werden. Hierfür ist dem Auslaß 14 am unteren Ende des konischen Bodenteiles 12 je eine Transporteinrichtung 49 beziehungsweise 49' nachgeschaltet, durch welche Verbrennungsrückstände entweder durch eine Schleuse 52 in den Ofeneinlauf 29

0141932

oder durch eine Öffnung 53 in einen mittleren Teil des Kühlers 28 eingetragen werden. Auch andere Verwertungen des Verbrennungsrückstandes sind möglich, zum Beispiel Beimengung zum Zement-Fertigprodukt. Laugungsresistente Rückstände können auch deponiert werden.

Die Funktion der miteinander gekoppelten Anlagen, und zwar einerseits der Einrichtung 1 zur Entsorgung von Abfallstoffen und andererseits der Zementbrennanlage 2, die an sich aus der vorgängigen Beschreibung ersichtlich ist, soll hier nochmals kurz erläutert werden:

Während des Betriebes der Zementbrennanlage, der als dem Fachmann bekannt vorausgesetzt wird, sind, solange die Einrichtung 1 zur Entsorgung noch nicht im Betrieb ist, die Drosselorgane 36 in der Brennluftzuführung 13 und 38 in der Rauchgasleitung 15 geschlossen. Somit arbeitet die Zementbrennanlage 2 für sich allein ohne jede Beeinflussung durch die parallel angeordnete Einrichtung 1 zur Entsorgung von Abfallstoffen. Bei deren Inbetriebnahme werden zunächst die beiden Drosselorgane 36 und 38 nach und nach geöffnet. Dabei fließt heiße Kühlerluft durch das noch leere Brennaggregat 3 im Bypass zur Tertiärluftleitung 32 und erwärmt die bis dahin kalten Anlagenteile. Um den Aufwärmvorgang zu beschleunigen wird gleichzeitig der Zünd- und Stützbrenner 39 gezündet. Sobald im Brennaggregat 3 eine oberhalb der Zündgrenzen liegende Temperatur erreicht ist, wird mit Hilfe der Gutaufgabevorrichtung 4 unter Ingangsetzung des gravimetrischen Abzugorganes 6 Müll 42 aus dem Vorratsbunker 5 abgezogen und durch die Schleuse 7 in den Brennraum 10 des Brennaggregates 3 aufgegeben. Das Gut entzündet sich infolge der hohen Temperaturen in

K H D
H 83/44/84/20
0141932

der Brennkammer 3. Nunmehr werden die Drosselorgane 36 und 38 weiter geöffnet und die Verbrennung kommt voll in Gang.

Weil mit der Brennluftzuführung 13 zum Brennaggregat 3 der Zementbrennanlage 2 eine geringe Menge (zwischen 5 % und 10 %) heißer Brennluft entzogen wird, muß zur Einregelung entsprechender Heißgas-Mengenströme das Drosselorgan 37 in der Tertiärluftleitung 32 gedrosselt werden.

Für den Fall, daß Gasanalysen ein Ansteigen von Schadstoffgehalten im Gashaushalt der Zementbrennanlage 2 anzeigen sollten, ist, wie an sich bekannt, ein Teilgasabzug 40 von schadstoffbeladenem Ofenabgas vorgesehen.

Die vorgängig beschriebenen regelungstechnischen Einrichtungen, insbesondere die Meß- und Analysevorrichtung 16 in der Rauchgasleitung 15 sorgen nach Ingangsetzen der Einrichtung 1 über die Regeleinheit 45 und die von ihr gesteuerten Drosselorgane 35, 36 und 39 für einen konstanten Ablauf des Verbrennungsprozesses der Abfallstoffe in der Brennkammer. Ebenso wird nach Maßgabe der Gaszusammensetzung im Rauchgas aufgrund des Gaswächters 16 über den selbständigen Regler 50 durch Schalten der Drosselorgane 38, 38' der Leitungsweg des Abgases beziehungsweise die Stelle der Einleitung in den Calcinator gegebenenfalls zwischen den Stellen 41 beziehungsweise 41' umgesteuert.

K H D
H 83/44/84/20
0141932

Patentansprüche

1. Verfahren zur schadstofffreien Beseitigung von Schad- und Abfallstoffen mit geringem Heizwert, insbesondere Müll, durch Verbrennung, dadurch gekennzeichnet, daß der Verbrennungsprozeß in einem Brennaggregat unter Zufuhr von heißer Brennluft als Energieträger von so hoher Temperatur durchgeführt wird, daß Verbrennungs- und/oder Rauchgastemperaturen von wenigstens 1.250 °C erreicht werden.

2. Verfahren nach Anspruch 1, dadurch gekennzeichnet, daß die Brennluft nach Maßgabe des Heizwertes der zu verbrennenden Stoffe beziehungsweise nach Maßgabe der Verbrennungs- und Rauchgastemperaturen mit Temperaturen im Bereich zwischen 600 °C und 950 °C, vorzugsweise mit ca. 800 °C in das Brennaggregat eingeführt wird.

3. Verfahren nach einem der Ansprüche 1 und 2, dadurch gekennzeichnet, daß der Verbrennungsprozeß bei Temperaturen zwischen 1.200 °C und 1.500 °C, vorzugsweise zwischen 1.300 °C und 1.400 °C durchgeführt wird.

4. Verfahren nach einem der Ansprüche 1 bis 3, dadurch gekennzeichnet, daß der Verbrennungsprozeß mit einem im Verhältnis zum Brennstoff stöchiometrisch zumindest ausgeglichenen Anteil an Brennluft durchgeführt wird.

5. Verfahren nach einem der Ansprüche 1 bis 4, dadurch gekennzeichnet, daß der Verbrennungsprozeß

0141932

mit einem Herstellungsprozeß von Zementklinker gekoppelt ist und parallel zu diesem durchgeführt wird, wobei Brennluft für den Verbrennungsprozeß der Schadstoffe aus dem beim Abkühlen des gebrannten Klinkers entstenenden heißen Kühlerabluftstrom abgezweigt und in das Brennaggregat eingeleitet und Rauchgas aus dem Brennaggregat in das System der Zementklinker-Brennanlage, vorzugsweise in die Calcinierzone eingeleitet wird.

6.  Verfahren nach einem der Ansprüche 1 bis 5, dadurch gekennzeichnet, daß dem Müll eine solche Menge an kalkhaltigen Carbonatträgern zugesetzt wird, daß der CaO-Gehalt des Brennproduktes wenigstens 30 Masse-Prozent beträgt.

7.  Verfahren nach Anspruch 6, dadurch gekennzeichnet, daß der CaO-Gehalt des Brennproduktes zwischen 30 % und 70 %, vorzugsweise zwischen 40 % und 55 % beträgt.

8.  Verfahren nach einem der Ansprüche 6 und 7, dadurch gekennzeichnet, daß kalkhaltiges beziehungsweise calciumcarbonathaltiges Gut vorzugsweise als Gesteinsmehl einem beim Brennprozeß erzeugten Strom heißen Abgases aufgegeben wird, wobei ein Zusatz von Carbonatträgern zum Müll beziehungsweise zum Abgas nach Maßgabe von Art und Menge der aus dem Abgas abzuscheidenden beziehungsweise zu bindenden Schadstoffe, oder nach Art und Menge der im Brennprodukt laugungsresistent zu bindenden Rückstände eingestellt wird.

9. Verfahren nach einem der Ansprüche 1 bis 8, dadurch gekennzeichnet, daß entsäuertes Gesteinsmehl dem Müll mit Entsäuerungstemperatur zugesetzt wird, und daß Erwärmung und/oder Entsäuerung des Gesteinsmehls in einem dem Brennaggregat abgasseitig vorgeschalteten Schwebegaswärmetauscher, vorzugsweise mit Calcinator, durchgeführt wird.

10. Verfahren nach einem der Ansprüche 1 bis 9, dadurch gekennzeichnet, daß beim Müllbeziehungsweise beim kombinierten Zement-Brennprozeß anfallendes Abgas nach Maßgabe des Gehaltes an störenden Elementen wie Alkalien, Halogenen oder Schwefel, mindestens zum Teil aus dem Prozeß abgezogen, und das abgezogene Gas fallweise einer Verwendung wie Wärmegewinnung, Dampf- oder Leistungserzeugung oder Trocknung der Carbonatträger und/oder des Mülls zugeführt, und/oder in einer Gasreinigung nachbehandelt wird.

11. Verfahren nach einem der Ansprüche 1 bis 10, dadurch gekennzeichnet, daß im abgezogenen Gas anfallende Kondensate und/oder Stäube zusammen mit dem Brennprodukt zu einer auslaugungsresistenten, gefahrlos deponierbaren Konsistenz, zum Beispiel durch Hydratisierung, verarbeitet werden.

12. Verfahren nach einem der Ansprüche 1 bis 11, dadurch gekennzeichnet, daß Rückstände des Verbrennungsprozesses wenigstens zum Teil dem Brenngut der Zementbrennanlage hinzugefügt und gegebenenfalls zusammen mit Klinker gebrannt, gekühlt und/oder vermahlen werden.

13. Verfahren nach einem oder mehreren der Ansprüche 1 bis 12, dadurch gekennzeichnet, daß das Brennprodukt allein vor einer weiteren Nutzung oder Verwerfung zu einer Konsistenz verarbeitet wird, bei welcher Schadstoffe in einer Bindung vorliegen, die eine Gefährdung der Umwelt ausschließen.

14. Verfahren nach den Ansprüchen 11 bis 13, dadurch gekennzeichnet, daß die Konsistenz des Brennproduktes vorzugsweise durch Hydratisierung mit oder ohne Zugabe von Zuschlagstoffen und/oder weiteren Bindemitteln hergestellt wird.

15. Verfahren nach einem der Ansprüche 1 bis 14, dadurch gekennzeichnet, daß Müll durch eine Schleuse unter Gasabschluß der Einlaufkammer des Brennaggregates aufgegeben wird.

16. Verfahren nach einem der Ansprüche 1 bis 15, dadurch gekennzeichnet, daß Müll in die heißeste Zone des Zement-Brennprozesses mit vorzugsweise heißer Trägerluft beziehungsweise Trägergas eingeblasen wird.

17. Verfahren nach einem der Ansprüche 1 bis 16, dadurch gekennzeichnet, daß Müll in einem zum Zement-Brennprozeß parallelen Trockendestillationsprozeß unter Sauerstoffmangel und Wärmezufuhr zu einem Schwelgas und einem festen Rückstand thermisch aufgeschlossen und das Schwelgas zur wenigstens teilweisen Energie-Bedarfsdeckung beim Brennprozeß herangezogen, und der Rückstand vorzugsweise mit Carbonatträgern zum Brennprodukt umgesetzt wird.

18. Verfahren nach einem der Ansprüche 1 bis 17, dadurch gekennzeichnet, daß Müll wenigstens zum Teil beim Zement-Brennprozeß im Einlaufbereich des Zement-Brennofens unter Sauerstoffmangel und Wärmezufuhr zu Schwelgas und einem festen Rückstand aufgeschlossen wird, und daß das Schwelgas unter Mischung mit Brenngas des Zement-Brennofens in der Calcinationszone unter Zufuhr von heißer Brennluft und fallweise weiteren Brennstoffs verbrannt, und der Rückstand im Zement-Brennofen unter Mischung mit entsäuertem Gesteinsmehl zu einem hydraulischen Bindemittel umgesetzt wird.

19. Verfahren nach einem der Ansprüche 1 bis 18, dadurch gekennzeichnet, daß das Brennprodukt zur Erreichung eines glasigen Zustandes aufgeschmolzen wird.

20. Verfahren nach einem der Ansprüche 1 bis 19, dadurch gekennzeichnet, daß als Brennaggregat ein Drehrohrofen verwendet wird.

21. Vorrichtung zur schadstofffreien Beseitigung von Schad- und Abfallstoffen mit geringem Heizwert, wie Müll, insbesondere zur Durchführung des Verfahrens nach den Ansprüchen 1 bis 20, wobei die Vorrichtung ein Brennaggregat mit einer Zuführung für Brennluft aufweist, welche an eine Heißgasquelle angeschlossen ist, dadurch gekennzeichnet, daß die Vorrichtung (1) mit einer Zementbrennanlage (2) gekoppelt und die Zuführung für Verbrennungsluft an den Heißluftaustrag (33) des Klinkerkühlers (28) angeschlossen ist, daß das Brennaggregat (3) eine Rauchgasleitung (15) aufweist, die im System der Zementbrennanlage in den Calcinator (24) einmündet, und daß das Brennaggregat (3) eine als Gasschleuse (7) ausgebildete Einrichtung zur Gutzuführung aufweist.

22. Einrichtung nach Anspruch 21, dadurch gekennzeichnet, daß diese eine Fördereinrichtung (39, 49') aufweist, die Verbrennungsrückstände aus dem Brennaggregat (3) in den Zementbrennofen (26) oder in den Kühler (28) der Zementbrennanlage (2) oder zur Zementmühle beziehungsweise zu einer Deponie fördert.

23. Einrichtung nach einem der Ansprüche 21 oder 22, dadurch gekennzeichnet, daß diese wenigstens eine Meßeinrichtung (16) zur Ermittlung der Zusammensetzung und/oder Temperatur der Rauchgase aufweist.

24. Einrichtung nach einem der Ansprüche 21 bis 23, dadurch gekennzeichnet, daß das Brennaggregat (3) Mittel zur Einstellung der Temperatur der Brennluft, insbesondere eine regelbare Frischluftzumischeinrichtung (34, 35), aufweist.

25. Einrichtung nach Anspruch 21 bis 24, dadurch gekennzeichnet, daß das Brennaggregat (3) einen Zünd- und/oder Stützbrenner (11, 39) aufweist.

FIG.1

H 83/44, 84/20

0141932

FIG.2

0141932

FIG.3

H 83/44,84/20

FIG.4